# EUROPÄISCHE PATENTSCHRIFT

(11) **EP 2 439 870 B1**
(45) Veröffentlichungstag und Bekanntmachung des Hinweises auf die Patenterteilung: **03.09.2014**
(21) Anmeldenummer: 11009645.0
(22) Anmeldetag: 16.09.2002
(51) Int. Cl.: H04L 5/02, H04L 27/26

(54) **Verfahren zum Erzeugen von Sendesignalen bzw. OFDM-Symbolen in einem Komminikationssystem und Kommunikationssystemvorrichtung**
Method for generating transmission signals or OFDM symbols in a communication system and communication system device
Procédé de production de signaux d'émission ou de symboles OFDM dans un système de communication et dispositif de système de communication

(30) Priorität: 18.09.2001 DE 10146002; 18.09.2001 EP 01122310
(43) Veröffentlichungstag der Anmeldung: 11.04.2012
(62) Teilanmeldung aus: 02777120.3
(73) Patentinhaber: Siemens Aktiengesellschaft, 80333 München (DE)
(72) Erfinder: Costa, Elena, Dr., 81739 München (DE); Galda, Dirk, 85540 Haar-Gronsdorf (DE); Haas, Harald, Prof., Edinburgh EH10 5RE (GB); Rohling, Hermann, Prof., 38304 Wolfenbüttel (DE); Schulz, Egon, Dr., SW4 8JR London (GB)

(56) Entgegenhaltungen:
- EP-A- 0 966 133
- US-B1- 6 188 717
- SAULNIER G J ET AL: "OFDM spread spectrum communications using lapped transforms and interference excision", COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8. Juni 1997 (1997-06-08), Seiten 944-948, XP010227242, ISBN: 0-7803-3925-8
- HO T F ET AL: "Synthesis of low-crest waveforms for multicarrier CDMA system", GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 131-135, XP010159486, ISBN: 0-7803-2509-5

## Beschreibung

Die Erfindung bezieht sich auf ein Verfahren zum Erzeugen von Sendesignalen, insbesondere OFDM-Symbolen dafür, in einem Kommunikationssystem gemäß dem Oberbegriff des Patentanspruches 1 sowie eine Kommunikationssystemvorrichtung gemäß dem Oberbegriff des Patentanspruches 2.

Bei modernen Kommunikationssystemen, insbesondere gemäß dem Standard GSM (Global System for Mobile Communications) oder UMTS (Universal Mobile Telecommunications System) werden Teilnehmerdaten vor dem Erzeugen eines Sendesignals codiert und auf einen Träger aufgeteilt.

Bei Kommunikationssystemen der vierten Generation sind Vielfachzugriffsverfahren mit OFDM-Übertragungssystemen (OFDM: Orthogonal Frequency Division Multiplex) geplant. Diese ordnen die Teilnehmerdaten bzw. Daten von jeweils bestimmten Datenquellen einer Anzahl von Subträgern in OFDM-Symbolen (OFDM-TDMA) oder einer Zahl unterschiedlicher Subträger (OFDM-FDMA) zu. Bei beispielsweise OFDM-FDMA (FDMA: Frequency Division Multiple Access) stellen die Subträger einzelne jeweils zueinander benachbarte Frequenzbänder eines größeren Frequenzbereiches dar. Bekannt ist z.B. auch, die Teilnehmerdaten bzw. Userdaten jeweils einer Anzahl kompletter OFDM-Symbole exklusiv zuzuordnen, wie bei OFDM-TDMA (TDMA: Time Division Multiple Access), wobei die Teilnehmerdaten in dem OFDM-Symbol für die Übertragung über die Schnittstelle zwischen verschiedenen Kommunikationsstationen zeitlich aufeinander folgend angeordnet werden, insbesondere Teilnehmerdaten einer Station jeweils einem oder mehreren der OFDM-Symbole direkt aufeinander folgend zugeordnet werden. Durch solche OFDM-Übertragungsverfahren werden Zwischensymbol-Interferenzen (ISI: Inter-Symbol-Interferences) vermieden. Ferner werden bei beiden Vielfachzugriffsverfahren zusätzlich Mehrfachzugriff-Interferenzen (MAI: Multiple Access Interferences) vermieden.

Gemäß einer alternativen Verfahrensweise können die Teilnehmerdaten durch die Verwendung orthogonaler Codes mit Hilfe einer orthogonalen Matrix über eine vorgegebene Anzahl von Subträgern und/oder OFDM-Symbole gespreizt werden, wie bei dem unter OFDM-CDMA bzw. MC-CDMA (CDMA: Code Division Multiple Access; MC: Multiple Carrier) bekannten Verfahren. Bei dem OFDM-CDMA-Verfahren werden die Daten aller Teilnehmer allen verfügbaren Frequenzen zugeordnet, wobei Codes zur Trennung verwendet werden. Ohne weitere Maßnahmen entstehen in diesem Fall und insbesondere bei Betrachtung mehrerer Teilnehmer- bzw. Datenquellen, deren Daten parallel zueinander eingehen, unerwünschte Mehrfachzugriffs-Interferenzen.

Zur Vermeidung dieses Problems erfolgt eine Spreizung der Teilnehmerdaten über mehrere Subträger daher nur bei gleichzeitiger Zuordnung von Subträgern zu mehreren Teilnehmern, was als OFDM-FDMA mit Teilnehmer/User-spezifischer Spreizung der Nutzdaten bezeichnet wird. Spreizung und Zuordnung von Subträgern erfolgen dabei in einem gemeinsamen und umfassenden Verfahrensschritt. Zur Spreizung werden vorwiegend sogenannte Walsh-Hadamard-Matrizen unterschiedlicher Größe eingesetzt, wie dies beispielsweise aus M. Yee, J.-P. Linnartz: Controlled Equalization of Multi-Carrier CDMA in an Indoor Rician Fading Channel, Proc. IEEE VTC'94, Stockholm, Schweden, 1994, oder T. Müller, K. Brüninghaus, H. Rohling: Performance of Coherent OFDM-CDMA for Broadband Mobile Communications, Wireless Personal Communications, Kluwer Academic Publisher, 1996, bekannt ist. Verschiedenen Teilnehmern werden dabei je nach benötigter Datenrate zur Übertragung eine Anzahl zwischen 1 und N der orthogonalen Codes zugeordnet, wobei N die Anzahl der verfügbaren Subträger ist.

Ferner ist aus K. Brüninghaus, H. Rohling: Multi Carrier Spread Spectrum and its Relationship to Single-Carrier Transmission, Proc. IEEE VTC'98, Ottawa, Kanada, 1998, eine Spreizung mittels einer FFT-Matrix (FFT: Fast Fourier Transformation) zur Reduzierung des Verhältnisses der Spitzenwerte zu den Durchschnittswerten (PAR: Peak-to-Average-Ratios) allgemein diskutiert, wobei jedoch Vielfachzugriffe nicht berücksichtigt werden.

Aus der EP 0966133 A2 ist ein OFDM-Übertragungs-Verfahren zum drahtlosen Übertragen von Informationsdaten bekannt, bei dem die Daten, z.B. Sprach- oder Videodaten, mittel- oder unmittelbar einem Kanalkodierer zugeführt werden, der diese Daten kanalkodiert. Danach werden die kanalkodierten Daten über eine Verschachtelungseinrichtung an einen Modulator weitergeleitet, der eine Zeichenzuordnung bewirkt. Die modulierten Daten werden dann einer speziell für das angegebene OFDM-Übertragungs-Verfahren aufgebaute ROT-(Random Orthogonal Transform-)Schaltung zugeführt, die transformierte Daten an eine inverse schnelle Fourier-Transformations(IFFT)-Schaltung zur Erzeugung von Ausgangssignaldaten ausgibt. Die in der IFFT-Schaltung erzeugten Ausgangssignaldaten werden nach einer D/A- und Aufwärtswandlung mittels einer Empfangs/Sendeeinrichtung drahtlos übertragen. Bei der Operation in der ROT-Schaltung wird gemäß EP 98 104 287.2 ein Eingangs-Zeichenvektor mit n Daten-Abtastproben des Modulators mit einer ROT-Matrix mit n orthogonalen Spalten-Vektoren und n orthogonalen Zeilen-Vektoren multipliziert. Infolge dieser ROT-Operation entsteht ein transformierter Ausgangs-Zeichenvektor mit wiederum n Daten-Abtastproben. Die ROT-Technik ist eine Technik, welche die willkürlich verteilten Informationsdaten-Zeichenvektoren vor der IFFT-Verarbeitung und der OFDM-Modulation durch eine orthogonale Matrix zufallsmäßig anordnet. Diese willkürliche Verteilung wird nach der FFT-Verarbeitung und der OFDM-Demodulation auf der Empfangsseite aufgelöst.

Um gemäß der US-Druckschrift 6,188,717 B1 ein digitales, sowohl für die Aufwärtsstrecke als auch für die Abwärtsstrecke einsetzbares Funkübertragungsverfahren bereitzustellen, das eine hohe spektrale Effizienz aufweist, so dass eine sehr große Anzahl von aktiven Teilnehmerstationen über den zur Verfügung stehenden Funkkanal übertragen kann, dessen Modulationsverfahren eine kohärente Detektion mit geringem Aufwand und hoher Zuverlässigkeit ermöglicht, das Interferenzen zwischen den Teilnehmerstationen einer Basisstation verhindert und das eine annähernd fehlerfreie Übertragung unterschiedlicher Datenmengen (Audio, Video, Text, Daten usw.) über den zur Verfügung stehenden Funkkanal sicherstellt, wird das Mehrträgermodulationsverfahren mit der Spread-Spectrum-Technik in optimaler Weise kombiniert. Diese Kombination erlaubt eine Maximum-Likelihood-Sequenzschätzung mit geringer Komplexität zur kohärenten Detektion der Daten im Empfänger und kann sowohl für die Aufwärtsstrecke als auch für die Abwärtsstrecke verwendet werden. Die notwendige Kanalschätzung lässt sich in zweckmäßiger Weise durch eine einfache Wiener-Filterung realisieren.

Der Aufsatz von SAULNIER G. J. et al. mit dem Titel "OFDM Spread Spectrum Communications using Lappewd Transforms and Interference Excision" auf den Seiten 944 bis 948 erschienen in Communications, 1997, ICC 1997 Montreal, Towards the Knowledge Millennium, 1997 IEEE International Confenrence on Montreal, Que., Canada 8-12 June 1997, New York, NY, USA am 8. Juni 1997 beschreibt und untersucht die Performance von "Spread Spectrum"-basierten OFDM-Kommunikationssystemen bei der Existenz von klangbehafteten und gepulsten Gaußverteilten Interferenzen für ein ersten Systems mit Frequenzvielfalt (frequency diversity), bei dem gleiche Datenbits gleichzeitig auf allen Trägern/Kanälen gesendet werden und für ein zweites System mit Zeit- und Frequenzvielfalt, bei dem ein gegebenes Datenbit zunächst auf verschieden Kanälen/Trägern gesendet wird bis es auf allen möglichen Kanälen/Trägern übertragen wird. Dabei wird gezeigt, dass Interferenz-Auslöschung vorteilhaft in Empfänger eingesetzt werden können. Außerdem konnte anhand von "Bit Error Rate"-Simulationen bei auftretenden "Additive White Gaussian Noise (AWGN)" und Interferenzen in Systemen mit verschiedene Block-transformationen und einer "Modulated Lapped Transform (MLT)" gezeigt werden, dass MLT eine bessere Performance bezüglich der Fähigkeit, die Interferenzenergie zu begrenzen, besitzt.

Die Aufgabe der Erfindung besteht darin, ein alternatives Verfahren zum Erzeugen von Sendesignalen, insbesondere OFDM-Symbolen dafür, in einem Kommunikationssystem sowie eine alternative Kommunikationssystemvorrichtung zum Erzeugen von Sendesignalen, insbesondere OFDM-Symbolen dafür, anzugeben.

Diese Aufgabe wird sowohl ausgehend von dem im Oberbegriff des Patentanspruchs 1 definierten Verfahren zum Erzeugen von Sendesignalen, insbesondere OFDM-Symbolen dafür, in einem Kommunikationssystem durch die im Kennzeichen des Patentanspruchs 1 angegebenen Merkmale als auch ausgehend von der im Oberbegriff des Patentanspruchs 2 definierten Kommunikationssystemvorrichtung durch die im Kennzeichen des Patentanspruchs 2 angegebenen Merkmale gelöst.

Hierbei wird eine besonders vereinfachte Erzeugung der OFDM-Symbole vorgenommen, bei der keine Fast Fourier-Transformation (FFT) bzw. diskrete Fourier Transformation (DFT) und keine inverse Fast Fourier-Transformation (IFFT) verwendet wird, weil die beiden aufeinanderfolgenden Fourier-Transformationen sich in der Wirkung bis auf insbesondere die Frequenzverschiebung aufheben.

Durch die zeitlich wiederholte Abfolge der Daten in dem OFDM-Symbol entsteht auf den ersten Blick eine große Redundanz. Da sich jedoch beim Senden auf der Funk-Schnittstelle die entsprechend erzeugten Signale einer Vielzahl von Stationen überlagern, ist diese Redundanz im Gesamtsystem unter Voll-last jedoch nicht datenquellenspezifisch vorhanden. Bei z.B. dreifacher Redundanz für eine Datenquelle, dies entspricht vier Perioden bzw. einer Belegung jedes vierten Subträgers, können vier Datenquellen gleichzeitig ohne Interferenz auf die Luft-Schnittstelle zugreifen.

Entsprechend ist es gemäß der Erfindung in den Ansprüchen 1 und 2 bei der Kommunikation zwischen z.B. einer mobilen Teilnehmerstation und einer Basisstation in Aufwärtsrichtung (Uplink) auch möglich, die eintreffenden Daten der einzelnen Datenquellen gegebenenfalls nach üblicher Codierung, Verwürfelung und Modulation direkt auf die entsprechenden OFDM-Symbolpositionen zu verteilen bzw. zu kombinieren. Dadurch wird der Aufbau der sendenden Kommunikationsstation vorteilhaft vereinfacht. Zweckmäßigerweise kann die Basisstation unverändert bleiben und weiterhin die Struktur eines OFDM-Empfängers besitzen, um die OFDM-spezifischen Vorteile wie einfache Entzerrung des Empfangssignals und Trennung der Teilnehmerstationsdaten bzw. Teilnehmer ausnutzen zu können.

Ein Ausführungsbeispiel der Erfindung wird nachfolgend anhand der Zeichnungen näher erläutert. Es zeigen:
- FIG 1: ein Schema für einen allgemeinen Mehrfachzugriff, wobei die Struktur eines OFDM-FDMA-Systems mit teilnehmerspezifischer Spreizung der Datensymbole dargestellt ist;
- FIG 2: schematisch eine mögliche Realisierung eines OFDM-FDMA-Systems mit besonders bevorzugter FFT-Spreizmatrix und Zuordnung der Teilnehmerdaten zu äquidistanten Subträgern;
- FIG 3: schematisch eine Zuordnung von gespreizten Teilnehmerdaten zu äquidistanten Subträgern und
- FIG 4: die erfindungsgemäße Realisierungsform zum Erzeugen von OFDM-Symbolen.

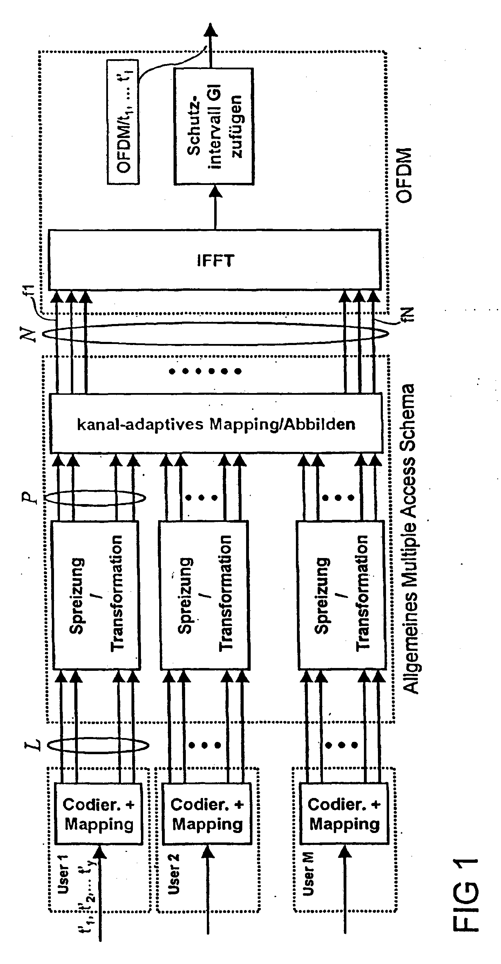

Wie aus FIG 1 ersichtlich, besteht ein Verfahren zum Erzeugen von OFDM-Symbolen aus verschiedenen einzelnen Schritten. Hereinkommende Teilnehmerdaten von einzelnen Teilnehmern bzw. Teilnehmerstationen oder Datenquellen sind einzelne Daten t'1, t'2, ... t'y, die in zeitlicher Abfolge eintreffen. Beispielhaft ist das Eintreffen von Daten von M verschiedenen Teilnehmern bzw. Teilnehmerstationen oder Datenquellen dargestellt (User 1 - User M). Es folgt eine individuelle Vorverarbeitung für die Daten dieser Teilnehmer bzw. User in einzelnen Blöcken, wobei die Vorverarbeitung beispielsweise in üblicher Weise aus einer Codierung, einer Verwürfelung (Interleaving) und einer Modulation besteht. Bei dieser ersten Codierung handelt es sich um eine Kanalcodierung, die teilnehmerspezifisch vorgenommen wird. Ferner erfolgt eine Umsetzung von einem seriellen Signal auf ein paralleles Signal, wobei die hintereinander eintreffenden Daten auf L verschiedene Datenpfade bzw. Leitungen verteilt bzw. abgebildet (Mapping) werden. Die y Zeitwerte werden somit pro Dateneingang codiert abgebildet, wodurch je Teilnehmer Datensymbole aus L komplexen Einzelwerten entstehen. Diese können Elemente irgendeines beliebigen Symbolsatzes sein, beispielsweise PSK-oder QAM-modulierte Daten (PSK: Phase Shift Keying; QAM: Quadratur Amplitude Modulation).

In dem nachfolgenden Block ist die eigentliche Transformation bzw. Spreizung und die Codierung der Daten verschiedener Teilnehmer auf die einzelnen Frequenz-Subträger dargestellt.

Die auf den jeweils für einen Teilnehmer auf L Datenpfaden eintreffenden Daten werden in einem ersten Schritt gespreizt, d.h. von insgesamt L Datenwerten auf P Datenwerte verteilt. Dies dient vorzugsweise der Ausnutzung der statistisch unabhängigen Ausbreitung der Signale auf unterschiedlichen Subträgern (Frequenz-Diversität). Bei den bevorzugten Ausführungsbeispielen wird die Anzahl der einzelnen Datenwerte bzw. Leitungen nicht verändert, obwohl dies auch möglich ist, so dass vor und nach der Spreizung jeweils L komplexe Datenwerte pro Teilnehmer vorliegen. In Analogie zur Spreizung der Daten mit Walsh-Hadamard-Matrizen bei OFDM-CDMA entspricht L der Anzahl der der Teilnehmerstation zugeordneten Codes und P der Anzahl der verfügbaren, orthogonalen Codesymbole. Die Spreizung entspricht in diesem Fall einem Volllast-System.

In dem nachfolgenden Schritt erfolgt die Abbildung auf die einzelnen Subträger, wobei vorzugsweise ein Kanal-adaptives Abbilden (Channel Adaptive Mapping) vorgenommen wird. Während in das dargestellte Symbol pro Teilnehmer P bzw. L Datenleitungen hineinführen, führen aus dem Symbol stellvertretend für die einzelnen Subträger Nc Leitungen bzw. Datenpfade heraus. Dabei steht die oberste Leitung stellvertretend für den Subträger f1...fN mit der niedrigsten Frequenz f1 und die unterste dargestellte Leitung bzw. der unterste Datenpfad steht für den Subträger mit der höchsten im Frequenzband verfügbaren Frequenz fN.

Nach der Verteilung der Daten auf die verschiedenen Frequenz-Subträger wird in dem dritten dargestellten Block zuerst eine inverse Fourier-Transformation durchgeführt, beispielsweise eine inverse schnelle Fourier-Transformation IFFT. Es folgt eine Umwandlung der parallelen Daten in serielle Daten. Gemäß den derzeit üblichen Konventionen wird dabei eine zeitliche Abfolge von Datenwerten t1...ti, ti+1...t2i,... erzeugt, denen zur Bildung eines OFDM-Symbols ein Schutzintervall GI (Guard Interval) als zyklische Fortsetzung des Zeitsignals vorweg gesetzt wird.

Bei der Beschreibung der Struktur des OFDM-FDMA-Systems mit der teilnehmerspezifischen Spreizung der Datensymbole wird vorstehend bewusst zwischen einerseits der Spreizung bzw. Transformation und andererseits dem Abbilden auf die Subträger unterschieden.

Diese Trennung wird vorgenommen, um in einem ersten Schritt die Daten der einzelnen Teilnehmer bzw. User zunächst mit Hilfe einer orthogonalen Matrix transformieren bzw. spreizen zu können. In dem nachfolgenden Schritt wird dann das Transformationsergebnis auf Subträger übertragen, wobei jedem der einzelnen Teilnehmer bzw. User exklusiv Subträger zugeordnet werden. Dabei kann die Zuordnung der Subträger prinzipiell beliebig erfolgen, wobei Systeme bevorzugt werden, bei denen die ersten Subträger dem ersten Teilnehmer und die letzten Subträger dem letzten Teilnehmer zugeordnet werden. Dies ist jedoch nicht zwingend erforderlich und insbesondere bei z.B. einer kanalangepassten Zuordnung nicht wünschenswert. Besonders bevorzugt werden jedoch Systeme, bei denen die Daten eines Teilnehmers bzw. Users auf äquidistant über das Frequenzband verteilte Subträger abgebildet bzw. übertragen werden. Dies ist zur Erreichung der konstanten Einhüllenden im Uplink vorteilhaft. Es kann jedoch unter Umständen auch vorteilhaft sein, gerade benachbarte Subträger derselben Teilnehmerstation zuzuordnen.

Der Vorteil, dass trotz der Anwendung der Transformation Mehrfachzugriffs-Interferenzen (MAI) vollständig vermieden werden können, ergibt sich dadurch, dass die Mehrfachzugriffs-Interferenzen auf Grund der Zuordnung von orthogonalen Subträgern an unterschiedliche Teilnehmerstationen vermieden werden. Die Spreizung ist eine Teilnehmerstationsspezifische Verarbeitung, wobei die Empfangsdaten im Gegensatz zu den Codesymbolen bei OFDM-CDMA im Uplink dem gleichen Kanaleinfluss unterliegen.

Dabei ist die Auswahl der orthogonalen Matrix prinzipiell beliebig. Bevorzugt werden die für sich bekannten Walsh-Hadamard-Transformation oder besonders eine Fourier-Transformation, insbesondere eine diskrete oder schnelle Fourier-Transformation.

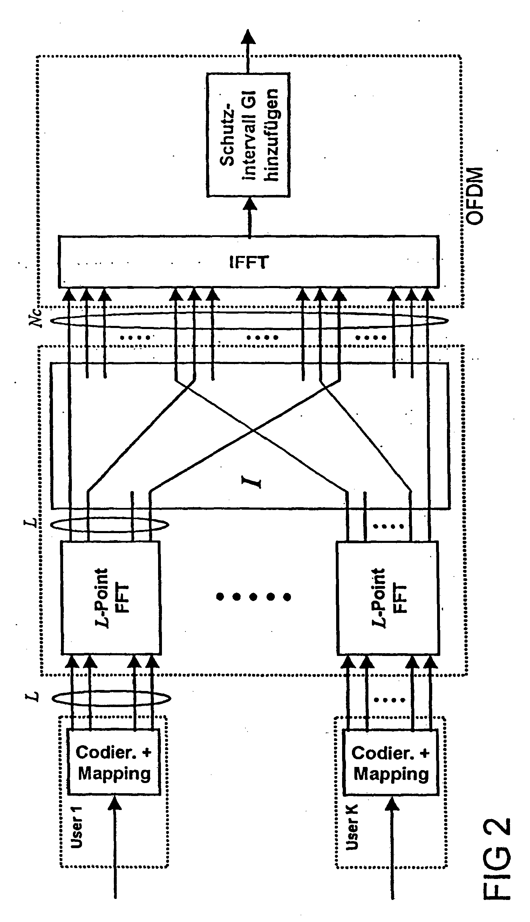

Die Anwendung einer schnellen Fourier-Transformation FFT als bevorzugte Form der Transformation bzw. Spreizung sowie die anschließende Übertragung auf einzelne Subträger ist aus FIG 2 in beispielhafter Ausführungsform ersichtlich. Die Fourier-Transformationen FFT werden dabei teilnehmerspezifisch durchgeführt, d.h. die eintreffenden Datensymbole eines Teilnehmers bzw. Users werden jeweils einer eigenen Fourier-Transformation zugeführt.

Die sich aus den einzelnen teilnehmerspezifischen Fourier-Transformationen ergebenden Daten werden dann auf die einzelnen Frequenz-Subträger f1 ... fN verteilt, wobei die Daten eines Teilnehmers vorzugsweise auf nicht direkt zueinander benachbarte Subträger übertragen werden. Rein prinzipiell kann diese Verteilung auf die einzelnen Subträger jedoch in beliebiger Art und Weise erfolgen.

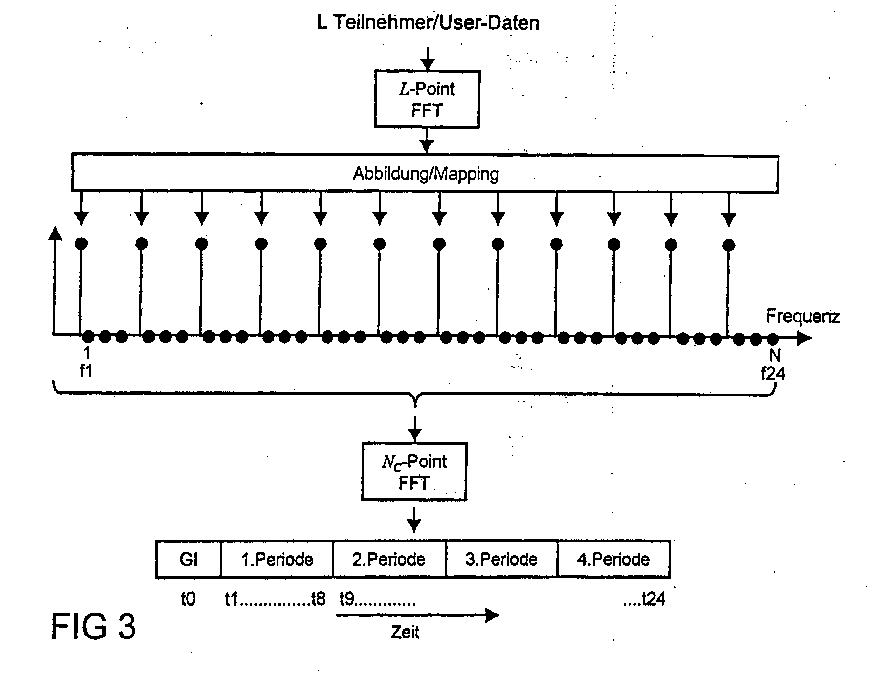

Wie aus FIG 3 ersichtlich, erfolgt eine besonders bevorzugte Verteilung der einzelnen Daten der teilnehmerspezifischen Fourier-Transformationen auf eine äquidistante Abfolge von Subträgern über der Frequenzachse. Gemäß FIG 3 werden L Teilnehmerdaten bzw. Datensymbole mit L Datenwerten eines Teilnehmers in die L-wertige Fourier-Transformation (L-Point-FFT) eingeführt. Bevorzugt, jedoch nicht zwingend erforderlich, werden durch die Fourier-Transformation wiederum L Datenwerte erzeugt, die auf die N Subträger abgebildet werden.

Die Abbildung der transformierten Werte erfolgt vorliegend auf N = 24 Frequenzkanäle als Subträger f1...f24, wobei die Anzahl der L Datenwerte L = 8 entsprechen soll. Wie dargestellt, kann bei einer äquidistanten Verteilung auf die Subträger f1 der erste Datenwert auf den ersten Subträger f1, der zweite Datenwert auf den fünften Subträger f5, usw. verteilt bzw. übertragen werden.

Es folgt eine Nc-wertige inverse Fourier-Transformation (Nc-Point FFT), die in den vorstehenden FIG als IFFT dargestellt ist. Nach der Umsetzung in eine serielle Datenfolge ergibt sich eine zeitliche Abfolge von einzelnen, über eine Schnittstelle zu übertragenden Datenwerten. Nach dem Vorsetzen eines Schutzintervalls GI ergibt sich hier ein OFDM-Symbol aus einem Schutzintervall GI und 24 zeitlich aufeinander folgenden Datenwerten t1...t24. Wie dargestellt, sind bei der vorliegenden äquidistanten Verteilung die einzelnen Datenwerte auf 4 Abschnitte bzw. Perioden verteilt, wobei alle Perioden des Zeitsignals jedes Teilnehmers bzw. Users identisch sind. Es ergibt sich eine periodische Wiederholung der Datensequenz.

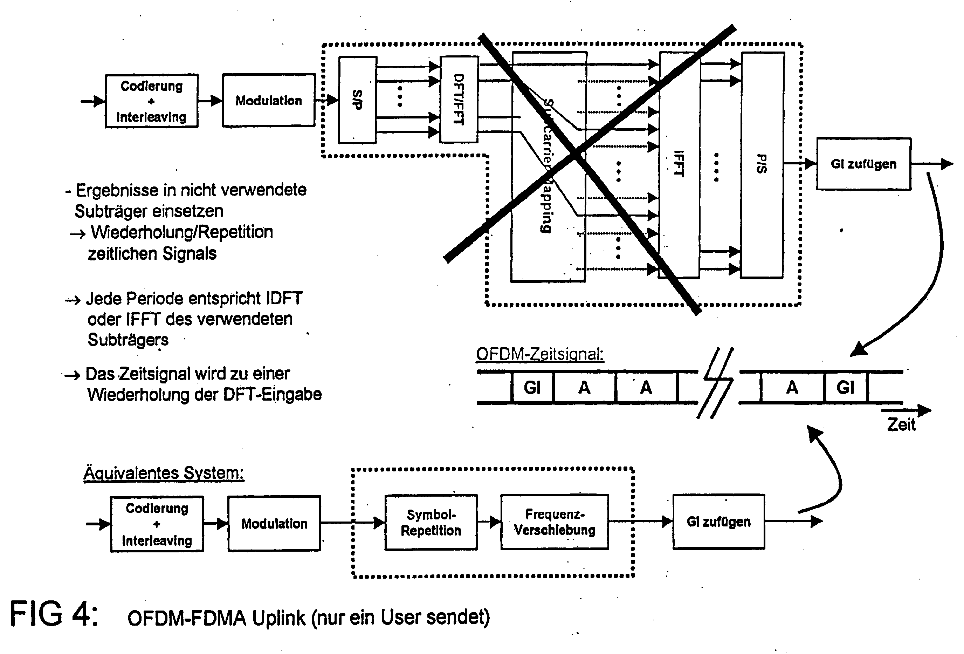

Handelt es sich bei dem Sender um eine Mobilstation, wie dies in FIG 4 dargestellt ist, bleiben alle weiteren Subträger unbelegt, da diese im Uplink von anderen mobilen Teilnehmer in anderen Mobilstation genutzt werden. Im Downlink besteht das Sendesignal aus der Überlagerung der periodischen Sendesignale aller Teilnehmer. Ist allen Teilnehmern die gleiche Anzahl L an Subträgern zugeordnet, so besitzt das Summensignal die gleiche Periodizität wie das Signal jedes einzelnen Teilnehmers. Sind unterschiedlichen Teilnehmern verschiedene Anzahlen an Subträgern zugeordnet, so besitzt dass Summensignal nicht zwangsläufig einen periodischen Signalverlauf. Im Uplink besitzt das Sendesignal eine konstante Einhüllende, wohingegen im Downlink auf Grund der Überlagerung der Signale verschiedener Teilnehmer bzw. Teilnehmerstationen die Einhüllende in der Regel nicht mehr konstant ist, jedoch einen deutlich geringeren Spitzenwert als ein herkömmliches OFDM-Signal aufweist. Entsprechend stellt FIG 2 den Abwärtsverbindung-/Downlink-Fall mit mehreren Teilnehmern pro Sender und FIG 3 den Uplink-Fall dar.

Dies mit einfachen Angaben verallgemeinert, bedingt bei einer Datensymbollänge L der eintreffenden Teilnehmerdaten und einer Abbildung auf ebenfalls L-wertige Transformationsergebnisse eine Abbildung auf die Subträger f1...fN, wobei N Subträger zur Verfügung stehen. Nach der inversen Fourier-Transformation hat dann das OFDM-Symbol die Länge N zuzüglich der Länge des Schutzintervalls GI. Die einzelnen Datenwerte sind dabei bei äquidistanter Verteilung auf N/L Datenperioden verteilt, wobei die Datenperioden auch als Datenblöcke oder Datenabschnitte bezeichnet werden können.

Der besondere Vorteil der Kombination einer durch eine Fourier-Transformation FFT gebildeten Spreizmatrix in Kombination mit der äquidistanten Verteilung auf der Frequenzachse besteht darin, dass nach der inversen Fourier-Transformation im Uplink ein Zeitsignal mit einer konstanten Einhüllenden und im Downlink ein Zeitsignal mit deutlich gegenüber einem herkömmlichen OFDM-System reduzierten Spitzenwert entsteht. Diese konstante Einhüllende ergibt sich, da das Spitzenwert-zu-Durchschnittswert-Verhältnis (PAR) deutlich geringer als bei anderen Erzeugungsverfahren für OFDM-Symbole ist. Es entspricht gerade dem PAR der Modulationsymbole vor der Transformation. Würde hier eine PSK-Modulation eingesetzt, so ist das PAR=1.

Zum Verständnis wird formell angemerkt, dass es sich hierbei um allgemeine lineare Transformationen handelt, also auch bei Anwendung einer Fourier-Transformation zum Transformieren bzw. Spreizen der teilnehmerspezifischen Daten kein direkter Bezug eines Frequenzraums zu einem Zeitraum besteht, wie dies bei einer üblichen Betrachtung von Fourier-Transformationen wäre.

Gemäß der erfindungsgemäßen Ausführungsform kann für den Fall der Betrachtung einer Fourier-Transformation als Spreizmatrix und einer anschließenden inversen Fourier-Transformation zur Übertragung der einzelnen Frequenz-Subträger auf eine zeitliche Datenfolge festgestellt werden, dass sich die beiden Fourier-Transformationen rein theoretisch hinsichtlich ihrer Wirkung aufheben. Als Konsequenz daraus kann eine besonders bevorzugte Ausführungsform zur Erzeugung von OFDM-Symbolen umgesetzt werden, wie sie in FIG 4 für beispielsweise eine Sendung in Aufwärtsrichtung (Uplink) von einer Teilnehmerstation zu einer netzseitigen Station dargestellt ist, wenn nur ein einzelner Teilnehmer sendet, wobei sich dann sich die Transformationen aufheben.

Durch die in der Wirkung aufhebende Transformationsabfolge einer Fourier-Transformation FFT und nach der Verteilung auf die einzelnen Subträger f1...fN einer inversen Fourier-Transformation IFFT kann bei der Umsetzung dieser Block entfallen bzw. durch eine Wiederholung der Symbolsequenz entsprechend der Anzahl der zugeordneten, jetzt fiktiven, Subträger und anschließender Frequenzverschiebung bei der Verteilung der Eingangsdaten auf die Ausgangsdaten ersetzt werden.

Eine Wiederholung des zeitlichen Signals entsteht daraus, dass die Subträger, die dem User nicht zugeordnet sind, unmoduliert bleiben. Jede einzelne Periode des OFDM-Signals entspricht dann letztendlich der inversen diskreten Fourier-Transformation der verwendeten Subträger. Somit enthält theoretisch bei idealer Umsetzung und später fehlerfreien Übertragung über die Schnittstelle empfängerseitig das empfangene OFDM-Signal hinter dem Schutzintervall GI eine Anzahl von Perioden mit jeweils gleicher Datenfolge. Das zeitliche Signal entspräche somit einer wiederholenden Abfolge der ursprünglichen Eingabe in die diskrete Fourier-Transformation, die gemäß der Ausführungsform von FIG 2 einleitend vorzunehmen wäre.

Wie aus FIG 4 im unteren Bereich ersichtlich, ergibt sich dadurch ein äquivalentes System, bei dem die Blöcke mit den Umsetzungen serieller in paralleler Daten, der teilnehmerspezifischen Fourier-Transformation, der Abbildung bzw. Übertragung auf die Subträger, der inversen Fourier-Transformation und der Umsetzung paralleler in serieller Daten ersetzt werden können durch eine Abfolge von sich wiederholenden Symbolen und eine entsprechend vorzunehmende Frequenzverschiebung.

## Patentansprüche

1. Verfahren zum Erzeugen von Sendesignalen, insbesondere OFDM-Symbolen dafür, in einem Kommunikationssystem, bei dem Daten von einer oder mehreren Datenquellen (User 1 - User M, User 1 - User K) auf eine Vielzahl von orthogonalen Subträgern (Nc) abgebildet werden,
**dadurch gekennzeichnet, dass**
die Daten der Datenquelle zur Bildung eines zeitlich abfolgenden OFDM-Symbols datenquellenspezifisch den Subträgern zugeordnet werden, wobei das OFDM-Symbol bei der Verteilung von Eingangsdaten auf Ausgangsdaten durch eine Wiederholung der Symbolsequenz entsprechend der Anzahl zugeordneter Subträger und eine anschließende Frequenzverschiebung gebildet wird.

2. Kommunikationssystemvorrichtung mit
- einem Dateneingang von zumindest einer Datenquelle,
- einer Steuereinrichtung zum Betreiben der Kommunikationssystemvorrichtung und zum Verarbeiten von Daten,
- zumindest einer Speichereinrichtung und/oder Verarbeitungsmodulen zum zeitweiligen Speichern und Verarbeiten von Daten der zumindest einen Datenquelle,
**dadurch gekennzeichnet, dass**
die Steuereinrichtung zum Erzeugen von Sendesignalen, insbesondere OFDM-Symbolen dafür, derart ausgebildet ist, dass die Daten der Datenquelle zur Bildung eines zeitlich abfolgenden OFDM-Symbols datenquellenspezifisch den Subträgern zuordbar sind, wobei das OFDM-Symbol bei der Verteilung von Eingangsdaten auf Ausgangsdaten durch eine Wiederholung der Symbolsequenz entsprechend der Anzahl zugeordneter Subträger und eine anschließende Frequenzverschiebung bildbar ist.

## Claims

1. Method for generating transmit signals, in particular OFDM symbols therefor, in a communication system, in which data is mapped from one or several data sources (User 1 - User M, User 1 - User K) to a plurality of orthogonal subcarriers (Nc),
**characterised in that**
the data of the data sources is assigned to the subcarriers in a data source-specific way for formation of a chronological OFDM symbol, wherein the OFDM symbol is used on distribution of the input data to the output data by a repetition of the symbol sequence corresponding to the number of assigned subcarriers and a subsequent frequency shift.

2. Communication device with
- a data input of at least one data source,
- a control device for operating the communication system device and for processing data,
- at least one of memory device and/or processing modules for temporary storage and processing of data of the at least one data source,
**characterised in that**
the control device is designed for generating transmit signals, in particular OFDM symbols therefor such that the data of the data sources can be assigned to the subcarriers in a data source-specific way for subsequent formation of a chronological OFDM symbol, wherein the OFDM symbol is used on distribution of the input data to the output data by a repetition of the symbol sequence corresponding to the number of assigned subcarriers and a subsequent frequency shift.

## Revendications

1. Procédé de production de signaux d'émission, et plus particulièrement de symboles OFDM pour ceux-ci, dans un système de communication, dans lequel des données d'une ou de plusieurs sources de données (User 1 - User M, User 1 - User K) sont appliquées sur une pluralité de sous-porteuses orthogonales (Nc),
**caractérisé en ce que**,
les données de la source de données, pour former un symbole OFDM se présentant sous la forme d'une suite temporelle, sont associées aux sous-porteuses de manière spécifique à la source de données, le symbole OFDM étant formé, lors de la répartition de données d'entrée sur des données de sortie, par une répétition de la séquence de symboles conformément au nombre de sous-porteuses associées et par un décalage de fréquence qui y fait suite.

2. Dispositif de système de communication comportant :
- une entrée de données d'au moins une source de données,
- un dispositif de commande pour exploiter le dispositif de système de communication et pour traiter des données,
- au moins un dispositif de mémoire et/ou des modules de traitement pour le stockage temporaire et le traitement de données de l'au moins une source de données,
**caractérisé en ce que** le dispositif de commande pour produire des signaux d'émission, et plus particulièrement des symboles OFDM pour ceux-ci, est conçu de telle manière que les données de la source de données, pour former un symbole OFDM se présentant sous la forme d'une suite temporelle, peuvent être associées aux sous-porteuses de manière spécifique à la source de données, le symbole OFDM pouvant être formé, lors de la répartition de données d'entrée sur des données de sortie, par une répétition de la séquence de symboles conformément au nombre de sous-porteuses associées et par un décalage de fréquence qui y fait suite.
